# EUROPÄISCHE PATENTANMELDUNG

(11) **EP 2 787 366 A1**
(43) Veröffentlichungstag der Anmeldung: **08.10.2014**
(21) Anmeldenummer: 14158810.3
(22) Anmeldetag: 11.03.2014
(51) Int. Cl.: G01S 13/88, G01N 22/00

(54) **Vorrichtung zur Identifizierung von Stoffen in z.B. einer Postsendung**

(30) Priorität: 04.04.2013 DE 202013003163 U
(71) Anmelder: Hübner GmbH & Co. KG, 34123 Kassel (DE)
(72) Erfinder: Dr. Frank ELLRICH, 55546 Fürfeld (DE); Daniel HÜBSCH, 34119 Kassel (DE); Daniel MOLTER, 67663 Kaiserslautern (DE); Thorsten SPRENGER, 34253 Lohfelden (DE)
(74) Vertreter: Walther, Robert

(57) **Zusammenfassung**

Gegenstand der Erfindung ist eine Vorrichtung zur Identifizierung von Stoffen in z. B. einer Postsendung umfassend einen Spektralapparat mit mindestens einem Sender und mindestens einem Empfänger zum Aussenden und Empfangen von Strahlung im Millimeter- oder Submillimeterwellenbereich, wobei eine Einrichtung zur Reduzierung der Luftfeuchte im Bereich des Strahlenganges mindestens des Senders und/oder des Empfängers vorgesehen ist.

## Beschreibung

Die Erfindung betrifft eine Vorrichtung zur Detektion gefährlicher Stoffe in einer Postsendung umfassend einen Spektralapparat mit mindestens einem Sender und mindestens einem Empfänger zum Aussenden und Empfangen von Strahlung im Millimeter- oder Submillimeterwellenbereich, also im Terahertzwellenbereich, und hier insbesondere im Bereich zwischen 0,1 und 5 THz.

Die dabei aufgenommenen Spektren sind aufgrund der Adsorption von Wasser bzw. Luftfeuchtigkeit in bestimmten Frequenzbereichen abgeschwächt. Dies erschwert die Auswertung des Spektrums des zu untersuchenden Stoffes.

Die der Erfindung zugrunde liegende Aufgabe besteht demzufolge darin, ein für die Auswertung eindeutiges nicht durch Luftfeuchtigkeit beeinträchtigtes Spektrum zu sorgen.

Die Aufgabe wird erfindungsgemäß dadurch gelöst, dass eine Einrichtung zur Reduzierung der Luftfeuchte im Bereich des Strahlenganges mindestens des Senders und/oder des Empfängers vorgesehen ist. Das heißt, dass die Luftfeuchte im Strahlengang des Spektralapparates so weit reduziert wird, dass bei der Auswertung keine Wasserlinien das Spektrum beeinträchtigen, und so die Auswertung hinsichtlich gefährlicher Stoffe stören können.

Vorteilhafte Merkmale und Ausgestaltungen der Erfindung ergeben sich aus den Unteransprüchen.

So ist insbesondere vorgesehen, dass die Einrichtung zur Reduzierung der Luftfeuchte eine Trockenpatrone umfasst. Solche Trockenpatronen sind hinlänglich bekannt, und besitzen im Inneren ein hygroskopisches Material, wobei dann, wenn die zu trocknende Luft durch die Trockenpatrone geführt wird, die Feuchtigkeit der Luft durch das hygroskopische Material im Inneren der Patrone gebunden wird.

Im Einzelnen ist in Bezug auf die Vorrichtung zur Detektion gefährlicher Stoffe in einer Postsendung vorgesehen, dass der Sender und der Empfänger jeweils in einem Gehäuse angeordnet sind. Bei einer solchen Ausbildung eines Spektralapparates hat es sich als insbesondere vorteilhaft herausgestellt, dass die Einrichtung zur Reduzierung der Luftfeuchte eine geschlossene Schlauch- oder Rohrleitung umfasst, wobei in der Schlauchoder Rohrleitung das Sender- und das Empfängergehäuse in Reihe zu der Trockenpatrone und einer Pumpe angeordnet sind. Hieraus wird deutlich, dass die in den Gehäusen befindliche Luft durch die Pumpe durch die Trockenpatrone im Kreis geführt wird, sodass sich bereits nach relativ kurzer Zeit eine signifikante Reduzierung der Luftfeuchte sowohl im Sender- als auch im Empfängergehäuse ergibt.

Sowohl das Sender- als auch das Empfängergehäuse weisen vorteilhaft jeweils eine Gehäuseöffnung zum Aus- und Eintritt der Terahertzwellenstrahlung auf, wobei die Gehäuseöffnung durch ein Fensterelement verschlossen ist, wobei das Fensterelement für Terahertzwellenstrahlung im Wesentlichen durchlässig ist. In diesem Zusammenhang ist insbesondere vorgesehen, dass das Fensterelement als Folie ausgebildet ist. Die Verwendung einer PTFE-Folie hat sich hierbei insbesondere als vorteilhaft herausgestellt, da PTFE (Teflon^{®}) im Wesentlichen transparent für Terahertzwellenstrahlung ist.

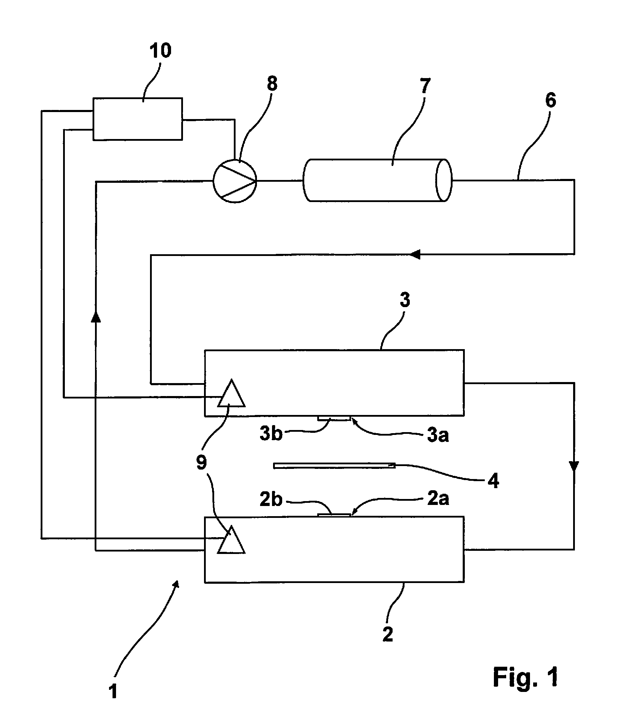

Anhand der Zeichnung wird die Erfindung nachstehend beispielhaft näher erläutert.

Der mit 1 bezeichnete Spektralapparat umfasst ein Gehäuse 2 mit einem Terahertzwellensender sowie ein dem Sendergehäuse gegenüberliegend ein zweites Gehäuse 3 mit einem Terahertzwellenempfänger. Sowohl das Sendergehäuse 2 als auch das Empfängergehäuse 3 weisen jeweils eine Gehäuseöffnung 2a, 3a auf, wobei die beiden Gehäuseöffnungen 2a, 3a durch eine PTFE -Folie 2b, 3b abgedeckt sind. Zwischen dem Sender- und dem Empfängergehäuse 2, 3 befindet sich die zu untersuchende Probe z. B. eine Postsendung 4. Sowohl das Gehäuse 2 mit dem Terahertzwellensender als auch das Gehäuse 3 mit dem Terahertzwellenempfänger sind zusammen mit der Trockenpatrone 7 und der Pumpe 8 in Reihe in einer geschlossenen Schlauch- oder Rohrleitung 6 angeordnet. "Geschlossen" bedeutet, dass die zu trocknende Luft im Kreis geführt wird. Hieraus wird deutlich, dass durch die Pumpe 8 kontinuierlich die Luft im Sender- und Empfängergehäuse 2, 3 getrocknet wird.

Die Luftfeuchtigkeit in den Gehäusen 2, 3 wird permanent durch Sensoren 9 gemessen, wobei durch eine mit den Sensoren in Verbindung stehende Steuerung 10, z. B. ein PC, die Pumpe 8 entsprechend der Luftfeuchtigkeit geregelt wird. Es ist insofern kein großes Zusatzgerät zur Herstellung von Trockenluft erforderlich. Durch die Erfindung ist ein schneller Wechsel der Proben möglich. Durch die Trocknung der Luft in dem Sender- und Empfängergehäuse befindet sich der Strahl zu 90 % in trockener Luft, sodass durchaus ein im Wesentliches störungsfreies Spektrum zur Untersuchung vorliegt.

### Bezugszeichenliste:

- 1: Spektralapparat
- 2: Sendergehäuse
- 2a: Gehäuseöffnung
- 2b: PTFE -Folie
- 3: Empfängergehäuse
- 3a: Gehäuseöffnung
- 3b: PTFE -Folie
- 4: Postsendung
- 6: Schlauch- oder Rohrleitung
- 7: Trockenpatrone
- 8: Pumpe
- 9: Sensor für Luftfeuchtigkeit
- 10: Steuerung (PC)

## Patentansprüche

1. Vorrichtung zur Identifizierung von Stoffen in z. B. einer Postsendung umfassend einen Spektralapparat mit mindestens einem Sender und mindestens einem Empfänger zum Aussenden und Empfangen von Strahlung im Millimeter- oder Submillimeterwellenbereich
**gekennzeichnet durch**
eine Einrichtung zur Reduzierung der Luftfeuchte im Bereich des Strahlenganges mindestens des Senders und/oder des Empfängers.

2. Vorrichtung zur Identifizierung von Stoffen in z. B. einer Postsendung nach Anspruch 1,
**dadurch gekennzeichnet,**
**dass** der Sender und der Empfänger jeweils in einem Gehäuse (2, 3) angeordnet sind.

3. Vorrichtung zur Identifizierung von Stoffen in z. B. einer Postsendung nach einem der voranstehenden Ansprüche,
**dadurch gekennzeichnet,**
**dass** die Einrichtung zur Reduzierung der Luftfeuchte eine Trockenpatrone (7) umfasst.

4. Vorrichtung zur Identifizierung von Stoffen in z. B. einer Postsendung nach Anspruch 3,
**dadurch gekennzeichnet,**
**dass** die Einrichtung eine geschlossene Schlauch- oder Rohrleitung (6) umfasst, wobei in der Schlauch- oder Rohrleitung das Sender- und Empfängergehäuse (2, 3) in Reihe oder parallel zu der Trockenpatrone (7) und einer Pumpe (8) angeordnet sind.

5. Vorrichtung zur Identifizierung von Stoffen in z. B. einer Postsendung nach einem der Ansprüche 2 bis 4
**dadurch gekennzeichnet,**
**dass** sowohl das Sender- als auch das Empfängergehäuse (2, 3) jeweils eine Gehäuseöffnung (2a, 3a) zum Aus- oder Eintritt der Strahlung im Millimeter- oder Submillimeterwellenbereich aufweisen, wobei die Gehäuseöffnung (2a, 3a) durch ein Fensterelement (2b, 3b) verschlossen ist, wobei das Fensterelement (2b, 3b) für Strahlung im Bereich der Frequenz von Terahertzwellen im Wesentlichen transparent ist.

6. Vorrichtung zur Identifizierung von Stoffen in z. B. einer Postsendung nach Anspruch 5,
**dadurch gekennzeichnet,**
**dass** das Fensterelement (2b, 3b) als Folie ausgebildet ist.

7. Vorrichtung zur Identifizierung von Stoffen in z. B. einer Postsendung nach Anspruch 5 oder 6,
**dadurch gekennzeichnet,**
**dass** das Fensterelement (2b, 3b) als PTFE -Folie ausgebildet ist.

8. Vorrichtung zur Identifizierung von Stoffen in z. B. einer Postsendung nach einem der vorherigen Ansprüche,
**dadurch gekennzeichnet,**
**dass** die Pumpleistung in Abhängigkeit der Luftfeuchte, ermittelt durch mindestens einen Sensor (9), durch eine Steuerung (10) geregelt wird.
